# DEMANDE DE BREVET EUROPEEN

(11) **EP 4 752 054 A1**
(43) Date de publication de la demande: **03.06.2026**
(21) Numéro de dépôt: 25198052.0
(22) Date de dépôt: 26.08.2025
(51) Int. Cl.: B64C 25/22, B64C 25/44, F15B 11/17

(54) **PROCEDE ET SYSTEME ELECTROHYDRAULIQUE DE COMMANDE D'UN TRAIN D ATTERRISSAGE RETRACTABLE D'UN AERONEF, TRAIN D ATTERRISSAGE ET AERONEF**

(30) Priorité: 28.11.2024 FR 2413147
(71) Demandeur: Airbus Helicopters, 13725 Marignane Cedex (FR)
(72) Inventeur: BECQUET, Roland, 13590 MEYREUIL (FR); BASSET, Grégory, 13500 MARTIGUES (FR); GRONDIN, Thomas, 13430 EYGUIERES (FR); ROCHER, Antonin, 13820 ENSUES-LA-REDONNE (FR)
(74) Mandataire: GPI Brevets

(57) **Abrégé**

La présente invention concerne un système (1) électrohydraulique de commande d'un train d'atterrissage (2) d'un aéronef, ledit train d'atterrissage (2) comportant une pluralité d'atterrisseurs (21,22) rétractables munis chacun d'au moins une roue (25,26). Ledit système (1) comporte deux dispositifs de freinage (11,12) pour freiner ladite roue (25,26) de deux atterrisseurs (21,22), un dispositif de déplacement (13,14,15) par atterrisseur pour déplacer un atterrisseur (21,22) par rapport à un logement dudit aéronef, et deux centrales hydrauliques (16,17), reliées hydrauliquement auxdits dispositifs de déplacement (13,14,15) et à au moins un desdits dispositifs de freinage (11,12). Chaque centrale hydraulique (16,17) comporte un réservoir (161,171) contenant un fluide, une pompe (162,172) entraînée par un moteur électrique de pompe (163,173) et un distributeur (164,174) configuré pour distribuer ledit fluide audit au moins un dispositif de freinage (11,12) et auxdits dispositifs de déplacement (13,14,15), à l'aide de vannes de freinage (165,175), déploiement (166,176), rétraction (168,178) et refoulement (167,169,177,179).

## Description

La présente invention se situe dans le domaine des trains d'atterrissage d'aéronef, et en particulier des trains d'atterrissage ayant des atterrisseurs rétractables.

La présente invention concerne un système électrohydraulique de commande d'un train d'atterrissage rétractable d'un aéronef ainsi qu'un tel train d'atterrissage rétractable et un aéronef. La présente invention concerne également un procédé de commande d'un tel système électrohydraulique.

Un aéronef peut comporter un train d'atterrissage muni de plusieurs atterrisseurs rétractables comprenant chacun au moins une roue. Ainsi, un aéronef, par exemple de type giravion, peut comprendre deux atterrisseurs principaux et un atterrisseur auxiliaire comprenant chacun une ou plusieurs roues.

Un tel aéronef comporte de plus un système de déplacement hydromécanique afin d'une part de rétracter les atterrisseurs au moins partiellement dans des logements d'une cellule de l'aéronef en cours de vol et, d'autre part, de sortir les atterrisseurs au moins partiellement de leurs logements respectifs en vue d'un atterrissage.

Un tel aéronef comporte également un système de freinage hydromécanique agissant simultanément sur un ou plusieurs atterrisseurs. Par exemple, un système de freinage peut agir sur les roues des deux atterrisseurs principaux.

Le système de déplacement et le système de freinage sont généralement hydrauliques. La génération de la puissance hydraulique alimentant ces deux systèmes est généralement centralisée et partagée avec d'autres équipements de l'aéronef, tels que les commandes de vol en particulier. Une telle centralisation nécessite l'emploi de nombreuses conduites hydrauliques et de nombreuses électrovannes pour piloter individuellement et indépendamment ces équipements. Ces électrovannes peuvent être réparties à divers emplacements dans l'aéronef, et sont alors alimentées électriquement par un réseau de faisceaux électriques cheminant dans l'aéronef.

Le système de freinage peut aussi comporter un accumulateur pour maintenir une pression suffisante dans le système de freinage et permettre ainsi l'immobilisation de l'aéronef sur une aire de stationnement lorsque le dispositif de génération de puissance n'est pas en fonctionnement.

En outre, la règlementation impose que le système de déplacement soit relié à au moins deux dispositifs de génération de puissance distincts par sécurité. Le système de déplacement peut ainsi être alimenté hydrauliquement d'une part par un dispositif de génération de puissance centralisé, et d'autre part par un dispositif de génération de puissance complémentaire ou de secours dédié à ce système de déplacement.

Le document EP 4006360 présente une architecture alternative et décrit un système hydraulique destiné à alimenter le train d'atterrissage principal d'un avion muni d'un atterrisseur droit et d'un atterrisseur gauche. Le système comporte deux centrales hydrauliques, une première centrale hydraulique alimentant l'atterrisseur droit et une seconde centrale hydraulique alimentant l'atterrisseur gauche. Chaque centrale hydraulique comporte un réservoir de fluide et une pompe entraînée par un moteur électrique. Le système comporte un système de vannes de secours permettant à l'une des centrales hydrauliques d'alimenter à la fois les atterrisseurs gauche et droit, notamment en cas de défaillance de l'autre centrale.

Les documents US 2005/0194495 et GB 2626551 sont aussi connus.

La présente invention a alors pour but de proposer une solution alternative et innovante pour fournir un système combiné de déplacement et de freinage d'un train d'atterrissage rétractable hydrauliquement autonome et indépendant de la puissance hydraulique de l'aéronef, et conforme à la réglementation.

La présente invention consiste à proposer un système électrohydraulique de commande indépendant et autonome pour un train d'atterrissage rétractable d'un aéronef permettant d'une part le déploiement et la rétraction du train d'atterrissage et d'autre part le freinage de ses roues.

La présente invention vise aussi un procédé de commande d'un tel système électrohydraulique destiné à commander un train d'atterrissage rétractable.

La présente invention a tout d'abord pour objet un système électrohydraulique de commande d'un train d'atterrissage d'un aéronef, le train d'atterrissage comportant une pluralité d'atterrisseurs rétractables munis chacun d'au moins une roue.

Ce système est remarquable en ce qu'il comporte :
- au moins deux dispositifs de freinage pour freiner ladite au moins une roue d'au moins deux atterrisseurs,
- un dispositif de déplacement par atterrisseur pour déplacer un atterrisseur par rapport à un logement de l'aéronef,
- deux centrales hydrauliques, chacune des deux centrales hydrauliques étant reliée hydrauliquement aux dispositifs de déplacement et à au moins un des dispositifs de freinage, chaque centrale hydraulique comportant un réservoir contenant un fluide, ainsi qu'une pompe entraînée par un moteur électrique de pompe, et un distributeur configuré pour distribuer le fluide audit au moins un dispositif de freinage et aux dispositifs de déplacement.

Le système électrohydraulique selon l'invention comporte au moins deux dispositifs de freinage pour freiner les roues d'au moins deux atterrisseurs respectifs, et plusieurs dispositifs de déplacement chacun configuré pour escamoter en vol un atterrisseur dans un logement d'une cellule de l'aéronef et sa sortie de ce logement en vue d'un atterrissage de l'aéronef. Chacune des centrales hydrauliques est reliée hydrauliquement aux dispositifs de déplacement et à au moins un des dispositifs de freinage, par l'intermédiaire de conduites. Les deux centrales hydrauliques sont sensiblement, voir strictement identiques.

Le système électrohydraulique selon l'invention permet ainsi de piloter le freinage des atterrisseurs d'un aéronef ainsi que leurs déploiements et leurs rétractions de façon autonome et indépendamment d'une puissance hydraulique centralisée de l'aéronef. Le système électrohydraulique selon l'invention peut ainsi être implanté au plus près des atterrisseurs, facilitant et simplifiant son installation, tout en respectant la réglementation relative à la redondance d'alimentation hydraulique des fonctions déploiement et rétraction des atterrisseurs.

Les réseaux hydrauliques et électriques peuvent être simplifiés. L'invention peut alors permettre de réduire l'encombrement et/ou la masse du système, et/ou d'améliorer sa fiabilité et de limiter les risques de défaillances, telles que les fuites par exemple.

De plus, l'alimentation simultanée des dispositifs de déplacement par les deux centrales hydrauliques permet, conformément à la réglementation, de pallier la panne d'une des centrales, la centrale opérationnelle alimentant seule les dispositifs de déplacement. Dans ce but chaque réservoir peut être dimensionné pour contenir le volume de fluide nécessaire pour alimenter seul les deux dispositifs de déplacement.

Enfin, la fonction freinage d'une part, et les fonctions déploiement et rétraction d'autre part n'étant pas mises en œuvre durant la même phase de vol, les centrales hydrauliques peuvent être optimisées, ce qui contribue à réduire également leur masse et leurs dimensions.

Le système électrohydraulique selon l'invention peut comprendre une ou plusieurs des caractéristiques qui suivent, prises seules ou en combinaison.

Selon une possibilité, le système électrohydraulique selon l'invention peut comporter uniquement deux dispositifs de freinage alimentés hydrauliquement respectivement par les deux centrales hydrauliques. Chaque dispositif de freinage est ainsi alimenté hydrauliquement par une seule centrale hydraulique, et chaque centrale hydraulique alimente hydrauliquement un seul dispositif de freinage.

Chaque dispositif de freinage est ainsi alimenté par une centrale hydraulique dédiée. Le freinage d'un atterrisseur peut être réalisé indépendamment du freinage d'un autre atterrisseur. Un freinage différentiel des deux dispositifs de freinage peut avantageusement être réalisé grâce à des alimentions hydrauliques différentes générées respectivement par les deux centrales hydrauliques.

Alternativement, le système électrohydraulique peut comporter uniquement deux dispositifs de freinage alimentés hydrauliquement conjointement par les deux centrales hydrauliques. Chaque dispositif de freinage est ainsi alimenté hydrauliquement par les deux centrales hydrauliques.

En mutualisant les deux centrales hydrauliques pour la fonction freinage, la fiabilité de cette fonction freinage est améliorée. En effet, le freinage reste identique et symétrique, à savoir effectué sur les deux atterrisseurs, y compris en cas de panne d'une des centrales hydrauliques.

Alternativement, le système électrohydraulique peut comporter autant de dispositifs de freinage que d'atterrisseurs, tous les atterrisseurs du train d'atterrissage étant alors associés à un dispositif de freinage. Dans ce cas, chaque dispositif de freinage peut être alimenté hydrauliquement par une seule centrale hydraulique ou conjointement par les deux centrales hydrauliques.

Selon une autre possibilité compatible avec les précédentes, le train d'atterrissage peut comporter trois atterrisseurs, par exemple deux atterrisseurs principaux et un atterrisseur auxiliaire, et les deux centrales hydrauliques peuvent être reliées hydrauliquement aux dispositifs de déplacement associés aux trois atterrisseurs.

Alternativement, le train d'atterrissage peut comporter au moins deux atterrisseurs principaux et un atterrisseur auxiliaire rétractables. Les deux centrales hydrauliques peuvent alors être reliées hydrauliquement aux dispositifs de déplacement associés aux atterrisseurs principaux et le système peut comporter un dispositif auxiliaire de déplacement associé à l'atterrisseur auxiliaire rétractable. Ce dispositif auxiliaire de déplacement peut par exemple comporter un moteur électrique de déplacement.

En outre, un aéronef peut comporter un atterrisseur complémentaire non rétractable et indépendant du train d'atterrissage.

Selon une autre possibilité compatible avec les précédentes, les dispositifs de déplacement peuvent comporter chacun un piston solidaire d'une tige et un cylindre creux, le cylindre comportant une chambre de déploiement et une chambre de rétraction séparées par le piston. Dans ce cas, le distributeur de chacune des centrales hydrauliques peut comporter :
- une vanne de freinage, reliée hydrauliquement à la pompe de cette centrale hydraulique et à au moins un des dispositifs de freinage, pour distribuer le fluide contenu dans le réservoir de cette centrale hydraulique audit au moins un dispositif de freinage,
- une vanne de déploiement, reliée hydrauliquement à la pompe de cette centrale hydraulique et aux chambres de déploiement des dispositifs de déplacement, pour distribuer le fluide contenu dans le réservoir de cette centrale hydraulique dans les chambres de déploiement,
- une vanne de rétraction, reliée hydrauliquement à la pompe de cette centrale hydraulique et aux chambres de rétraction des dispositifs de déplacement, pour distribuer le fluide contenu dans le réservoir de cette centrale hydraulique dans les chambres de rétraction,
- une première vanne de refoulement, reliée hydrauliquement au réservoir de cette centrale hydraulique et aux chambres de déploiement des dispositifs de déplacement, pour refouler le fluide contenu dans les chambres de déploiement dans le réservoir de cette centrale hydraulique, et
- une seconde vanne de refoulement, reliée hydrauliquement au réservoir de cette centrale hydraulique et aux chambres de rétraction des dispositifs de déplacement, pour refouler le fluide contenu dans les chambres de rétraction dans le réservoir de cette centrale hydraulique.

De plus, les deux centrales hydrauliques alimentant simultanément les chambres de déploiement ou de rétraction des différents dispositifs de déplacement et recevant le fluide refoulé de ces chambres de déploiement et de rétraction, une asymétrie dans ces alimentations et ces refoulements peut apparaître entre les deux centrales hydrauliques, susceptible de générer une différence significative dans les quantités de fluide hydraulique contenu dans les réservoirs de ces deux centrales hydrauliques après plusieurs déploiement et rétractions des atterrisseurs. Une utilisation combinée des vannes de déploiement, de rétraction et de refoulement permet d'équilibrer les quantités de fluide contenu dans chacun de ces réservoirs.

En outre, le distributeur peut comporter quatre clapets antiretour associés en série respectivement aux vannes de déploiement, de rétraction et de refoulement. Ces clapets peuvent être par exemple accolés aux vannes ou installés sur les conduites hydrauliques reliant ces vannes respectivement aux chambres de déploiement et de rétraction.

Ces clapets ont pour fonction d'éviter d'une part qu'un flux d'alimentation de fluide sortant des vannes de déploiement ou de rétraction atteigne les vannes de refoulement et d'autre part qu'un flux de refoulement de fluide sortant des chambres de déploiement ou de rétraction atteigne les vannes de déploiement ou de rétraction.

Le distributeur peut comporter un premier moteur électrique de commande commandant l'ouverture et la fermeture uniquement de la vanne de freinage, et un second moteur électrique de commande commandant des ouvertures et fermetures combinées des vannes de déploiement, de rétraction et de refoulement. L'utilisation de deux moteurs électriques de commande permet d'assurer une indépendance des fonctions freinage et déploiement/rétraction des atterrisseurs.

Alternativement, le distributeur peut comporter un unique moteur électrique de distribution commandant des ouvertures et fermetures combinées des vannes de freinage, de déploiement, de rétraction et de refoulement. L'utilisation d'un unique moteur électrique de distribution permet de limiter la masse et l'encombrement du distributeur et en conséquence de la centrale hydraulique.

La présente invention a aussi pour objet un aéronef comprenant un train d'atterrissage comportant au moins deux atterrisseurs rétractables munis chacun d'au moins une roue, l'aéronef comportant un système électrohydraulique de commande tel que précédemment décrit.

La présente invention a enfin pour objet un procédé de commande d'un système électrohydraulique tel que précédemment décrit.

Ce procédé comporte les étapes suivantes :
- alimentation en fluide sous pression du distributeur de chaque centrale hydraulique, par l'intermédiaire de la pompe de ladite centrale hydraulique respective,
- extension des dispositifs de déplacement, les vannes de freinage étant fermées, les vannes de déploiement et les secondes vannes de refoulement étant ouvertes, les vannes de rétraction et les premières vannes de refoulement étant fermées,
- alimentation des dispositifs de freinage, les vannes de freinage étant ouvertes, les vannes de déploiement et de rétraction étant fermées,
- rétraction des dispositifs de déplacement, les vannes de freinage étant fermées, les vannes de rétraction et les premières vannes de refoulement étant ouvertes, les vannes de déploiement et les secondes vannes de refoulement étant fermées.

A cet effet, le système hydraulique peut être piloté par un système avionique de l'aéronef ou un calculateur du système électrohydraulique, un contrôleur mettant en œuvre ce procédé.

En outre, pour permettre d'immobiliser l'aéronef sur un lieu de stationnement, un freinage de parking est réalisé, dans un premier temps en activant les pompes des centrales hydrauliques, les vannes de freinage étant ouvertes, pour augmenter la pression du fluide dans les dispositifs de freinage. Une fois une pression requise atteinte, les vannes de freinage sont fermées afin de maintenir les dispositifs de freinage sous la pression requise du fluide, les pompes étant alors désactivées.

De plus, le procédé peut comporter un équilibrage après déploiement, réalisé suite au déploiement des atterrisseurs, pour équilibrer les quantités du fluide contenu dans les réservoirs, les distributeurs comportant quatre clapets antiretour associés en série respectivement auxdites vannes de déploiement, de rétraction et de refoulement, tels que précédemment décrits.

L'équilibrage après déploiement peut comporter les étapes suivantes :
- détection d'une première centrale hydraulique contenant la plus grande quantité de fluide parmi les centrales hydrauliques, l'autre centrale hydraulique étant une seconde centrale hydraulique,
- activation de la pompe de cette première centrale hydraulique,
- ouverture de la vanne de déploiement et de la seconde vanne de refoulement de la première centrale hydraulique et des premières et secondes vannes de refoulement de la seconde centrale hydraulique,
- fermeture de la vanne de rétraction et de la première vanne de refoulement de la première centrale hydraulique et des vannes de déploiement et de rétraction de la seconde centrale hydraulique,
- détection que les réservoirs des première et seconde centrales hydrauliques contiennent une même quantité de fluide à une marge près, et
- désactivation de la pompe de la première centrale hydraulique.

De façon similaire, le procédé peut comporter un équilibrage après rétraction, réalisé suite à la rétraction des atterrisseurs, pour équilibrer les quantités du fluide contenu dans les réservoirs, les distributeurs comportant quatre clapets antiretour associés en série respectivement auxdites vannes de déploiement, de rétraction et de refoulement, tels que précédemment décrits.

L'équilibrage après rétraction peut comporter les étapes suivantes :
- détection d'une première centrale hydraulique contenant la plus grande quantité de fluide parmi les centrales hydrauliques, l'autre centrale hydraulique étant une seconde centrale hydraulique,
- activation de la pompe de cette première centrale hydraulique,
- ouverture de la vanne de rétraction et de la première vanne de refoulement de la première centrale hydraulique et des premières et secondes vannes de refoulement de la seconde centrale hydraulique,
- fermeture de la vanne de déploiement et de la seconde vanne de refoulement de la première centrale hydraulique et des vannes de déploiement et de rétraction de la seconde centrale hydraulique,
- détection que les réservoirs des première et seconde centrales hydrauliques contiennent une même quantité de fluide à une marge près, et
- désactivation de la pompe de la première centrale hydraulique.

Ces étapes d'équilibrage après déploiement et après rétraction peuvent être réalisées automatiquement ou sur ordre d'un opérateur, après la réalisation respectivement d'un déploiement et d'une rétraction des atterrisseurs.

Ces étapes permettent de répartir de façon sensiblement équivalente le fluide entre les deux réservoirs des deux centrales hydrauliques. Il va de soi que l'ouverture ou la fermeture d'une vanne est sans effet, si cette vanne était préalablement respectivement fermée ou ouverte.

Avantageusement, les chambres d'extension pendant l'équilibrage après extension et les chambres de rétraction pendant l'équilibrage après rétraction sont maintenues sous pression afin de maintenir les atterrisseurs respectivement sortis ou rentrés, y compris dans le cas où ils ne comportent pas de dispositifs de verrouillage.

La désactivation de la pompe de la première centrale hydraulique arrête le flux de fluide entre les réservoirs, signifiant la fin du transfert de fluide.

Les étapes de détection précitées peuvent par exemple comporter les étapes suivantes :
- mesure des quantités de fluide contenu dans les réservoirs des deux centrales hydrauliques,
- comparaison de ces quantités,
- détermination de la première centrale hydraulique dont ledit réservoir contient le plus de fluide, et
- détermination que les réservoirs des centrales hydrauliques contiennent une même quantité de fluide à une marge près.

Enfin, suite à chacune des étapes du procédé commandant l'ouverture et la fermeture de vannes, le distributeur peut se mettre dans une configuration nominale, lors d'une étape de mise en configuration nominale de toutes les vannes, comportant :
- une fermeture des vannes de déploiement et de rétraction, et
- une ouverture de la vanne de freinage et des premières et secondes vannes de refoulement.

Cette mise en configuration nominale est réalisée par exemple une fois le déploiement, la rétraction des atterrisseurs ou les équilibrages terminés, ou suite à l'alimentation des dispositifs de freinage. Lors de cette mise en configuration nominale ou avant celle-ci, les pompes des deux centrales hydrauliques sont désactivées.

L'invention et ses avantages apparaîtront avec plus de détails dans le cadre de la description qui suit avec des exemples donnés à titre illustratif en référence aux figures annexées qui représentent :
- la figure 1, une vue d'un système électrohydraulique de commande d'un train d'atterrissage selon l'invention,
- la figure 2, une vue d'un aéronef équipé d'un système électrohydraulique de commande d'un train d'atterrissage selon l'invention,
- la figure 3, une vue d'un système électrohydraulique de commande d'un train d'atterrissage selon l'invention,
- les figures 4 à 7, des vues d'un distributeur du système électrohydraulique de commande d'un train d'atterrissage de la figure 1,
- les figures 8 à 9, des vues des distributeurs d'un système électrohydraulique de commande d'un train d'atterrissage selon l'invention,
- la figure 10, un schéma synoptique d'un procédé de commande d'un tel système électrohydraulique,
- la figure 11, une vue d'un système électrohydraulique de commande d'un train d'atterrissage selon l'invention, et
- la figure 12, une vues d'un distributeur du système électrohydraulique de commande d'un train d'atterrissage de la figure 11.

Les éléments présents dans plusieurs figures distinctes sont affectés d'une seule et même référence.

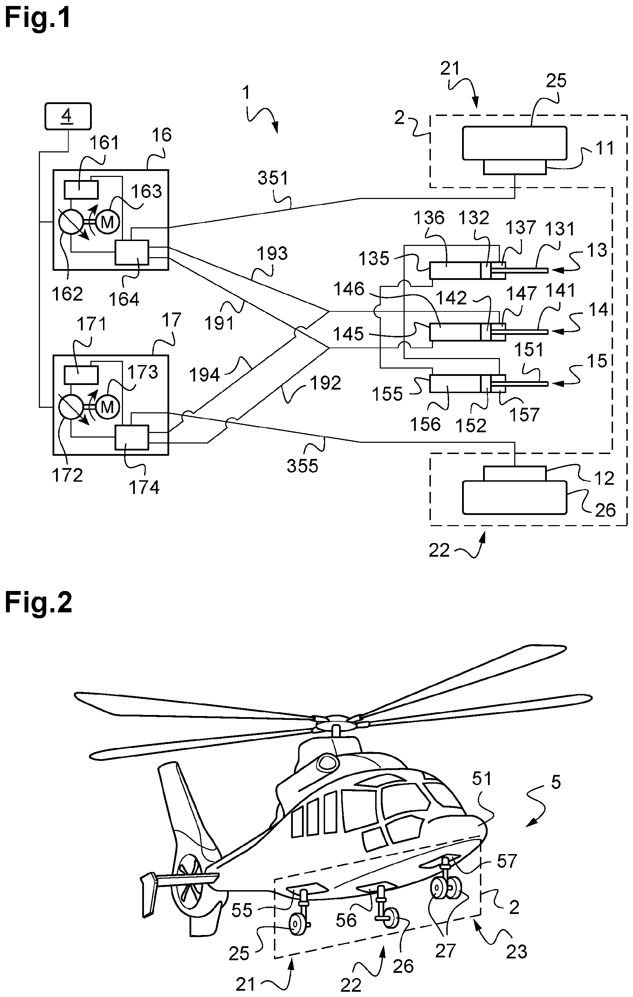

La figure 1 représente un système 1 électrohydraulique de commande d'un train d'atterrissage 2 d'un aéronef 5. Un tel train d'atterrissage 2 comporte une pluralité d'atterrisseurs 21,22,23 rétractables munis chacun d'une ou de plusieurs roues 25,26,27. Selon un exemple d'aéronef 2 à voilure tournante représenté sur la figure 2, un train d'atterrissage 2 peut comporter trois atterrisseurs 21,22,23 dont deux atterrisseurs principaux 25,26, éventuellement situés dans une zone arrière de l'aéronef 2, et un atterrisseur auxiliaire 27, éventuellement situé dans une zone avant de l'aéronef 2. Les trois atterrisseurs 21,22,23 sont rétractables dans des logements 55,56,57 respectifs d'une cellule 51 de l'aéronef 2.

Le système 1 électrohydraulique comporte au moins deux dispositifs de freinage 11,12 pour freiner la rotation de la ou des roues 25,26,27 d'au moins deux atterrisseurs 21,22,23, chaque dispositif de freinage 11,12 agissant sur la ou les roues 25,26,27 d'un seul atterrisseur 21,22,23. Classiquement, un tel dispositif de freinage 11,12 peut comporter un dispositif de freinage à disque(s) ou à tambour relié à la ou les roues de l'atterrisseur 21,22,23.

Le système 1 électrohydraulique comporte également un dispositif de déplacement 13,14,15 par atterrisseur 21,22,23 pour déplacer un atterrisseur 21,22,23 par rapport à un logement 55,56,57. Chaque dispositif de déplacement 13,14,15 peut par exemple comporter un vérin hydraulique associé à un système mécanique muni d'articulations permettant le rangement et la sortie au moins partiels de l'atterrisseur 21,22,23 de son logement 55,56,57. Chaque dispositif de déplacement 13,14,15 peut ainsi être muni d'un piston 132,142,152 solidaire d'une tige 131,141,151 et d'un cylindre 135,145,155 creux. Le cylindre 135,145,155 peut comporter une chambre de déploiement 136,146,156 et une chambre de rétraction 137,147,157 séparées par le piston 132,142,152, la tige 131,141,151 sortant de la chambre de rétraction 137,147,157 du cylindre 135,145,155.

Un remplissage de la chambre de déploiement 136,146,156 par un fluide sous pression permet de déplacer le piston 132,142,152 et la tige 131,141,151 vers l'extérieur du cylindre 135,145,155 afin de sortir la roue 25,26,27 de l'atterrisseur 21,22,23 de son logement 55,56,57. Inversement, un remplissage de la chambre rétraction 137,147,157 par un fluide sous pression permet de rentrer la tige 131,141,151 dans le cylindre 135,145,155 afin de rentrer dans son logement 55,56,57 cet atterrisseur 21,22,23.

Un fonctionnement inverse est également possible, un déplacement de la tige du dispositif de déplacement vers l'extérieur de son cylindre provoquant une rentrée de l'atterrisseur 21,22,23 dans son logement 55,56,57, un déplacement de la tige 131,141,151 du dispositif de déplacement vers l'intérieur de son cylindre provoquant une sortie de l'atterrisseur 21,22,23 de son logement 55,56,57.

Le système 1 électrohydraulique comporte aussi deux centrales hydrauliques 16,17. Chaque centrale hydraulique 16,17 comporte un réservoir 161,171 contenant un fluide, une pompe 162,172 entraînée par un moteur électrique de pompe 163,173, et un distributeur 164,174 configuré pour distribuer le fluide audit au moins un dispositif de freinage 11,12 et aux dispositifs de déplacement 13,14,15.

Le système 1 électrohydraulique comporte enfin des conduites de freinage 351-353,355,356 reliant hydrauliquement chaque centrale hydraulique 16,17 à au moins un des dispositifs de freinage 11,12, et des conduites de déploiement 191,192 et de rétraction 193,194 reliant hydrauliquement chaque centrale hydraulique 16,17 aux chambres de déploiement 136,146,156 et de rétraction 137,147,157 des dispositifs de déplacement 13,14,15.

Selon l'exemple système 1 électrohydraulique représenté sur la figure 1, une première centrale 16 est reliée hydrauliquement à un premier dispositif de freinage 11,12 par une première conduite de freinage 351 et une seconde centrale 17 est reliée hydrauliquement à un second dispositif de freinage 12 par une seconde conduite de freinage 355. Le système 1 comporte selon cet exemple deux dispositifs de freinage 11,12 alimentés hydrauliquement respectivement et indépendamment par les deux centrales hydrauliques 16,17. Dans ce cas, un freinage différentiel des deux atterrisseurs 21,22 est possible en alimentant hydrauliquement différemment les deux dispositifs de freinage 11,12 respectivement par les deux centrales hydrauliques 16,17.

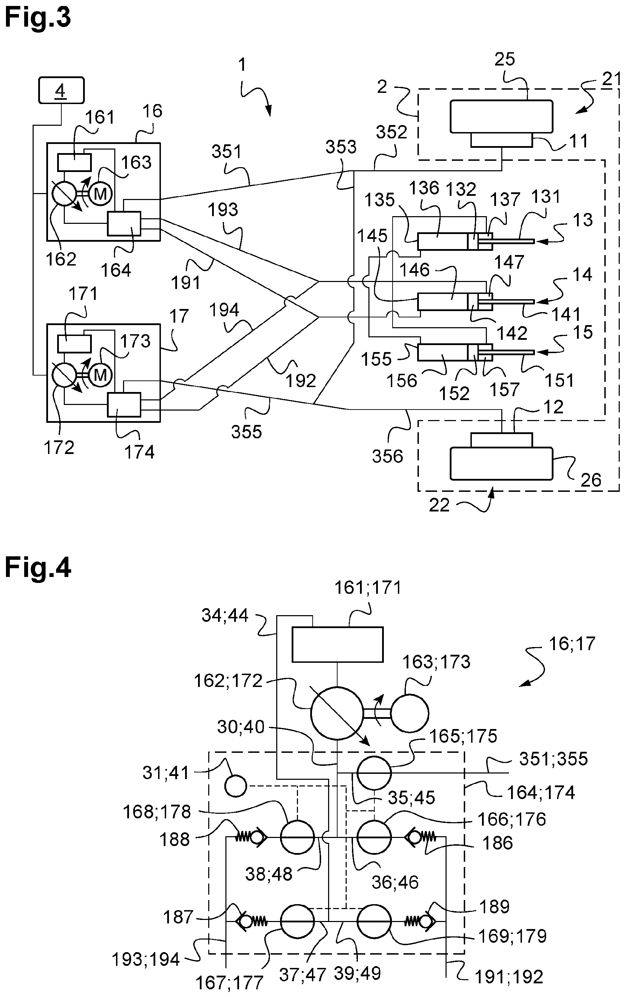

Selon un autre exemple représenté sur la figure 3, les deux centrales 16,17 sont reliées hydrauliquement respectivement aux deux dispositifs de freinage 11,12. Une première conduite de freinage 351 relie la première centrale 16 à des autres conduites de freinage 352,353,356 alimentant respectivement les deux dispositifs de freinage 11,12. De façon similaire, une seconde conduite de freinage 355 relie la seconde centrale 17 aux autres conduites de freinage 352,353,356 alimentant respectivement les deux dispositifs de freinage 11,12. Le système 1 comporte dans ce cas deux dispositifs de freinage 11,12 alimentés hydrauliquement conjointement par les deux centrales hydrauliques 16,17.

Par ailleurs et en référence aux figures 1 et 3, les deux centrales 16,17 sont chacune reliées hydrauliquement, à tous les dispositifs de déplacement 13,14,15, par les deux conduites de déploiement 191,192 alimentant leurs chambres de déploiement respectives 136,146,156 et par deux conduites de rétraction 193,194 alimentant leurs chambres de rétraction 137,147,157. Selon les deux exemples représentés, le train d'atterrissage 2 comporte trois atterrisseurs 25,26,27, et les deux centrales hydrauliques 16,17 sont reliées hydrauliquement aux trois dispositifs de déplacement 13,14,15 associés respectivement aux trois atterrisseurs 25,26,27.

Les figures 4 à 9 détaillent les deux centrales hydrauliques 16,17, ainsi que leur fonctionnement. Les distributeurs 164,174 des deux centrales 16,17 peuvent être sensiblement voire strictement identiques. Le distributeur 164,174 de chacune des centrales 16,17 comporte ainsi, comme représenté sur la figure 4, une vanne de freinage 165,175, reliée hydrauliquement à la pompe 162,172 de cette centrale 16,17 par une conduite interne de freinage 35,45 du distributeur 164,174 et à la conduite de freinage 351,355 alimentant au moins un des dispositifs de freinage 11,12.

Le distributeur 164,174 de chacune des centrales 16,17 comporte aussi une vanne de déploiement 166,176, reliée hydrauliquement à la pompe 162,172 de cette centrale hydraulique 16,17 par une conduite interne de déploiement 36,46 du distributeur 164,174 et à la conduite de déploiement 191,192 connectée aux chambres de déploiement 136,146,156 des dispositifs de déplacement 13,14,15 par.

Le distributeur 164,174 de chacune des centrales 16,17 comporte également une vanne de rétraction 168,178, reliée hydrauliquement à la pompe 162,172 de cette centrale hydraulique 16,17 par une conduite interne de rétraction 38,48 du distributeur 164,174 et à la conduite de rétraction 193,194 connectée aux chambres de rétraction 137,147,157 des dispositifs de déplacement 13,14,15.

Une conduite d'alimentation 30,40 peut relier les conduites internes de freinage 35,45, de déploiement 36,46 et de rétraction 38,48 à la pompe 162,172.

Le distributeur 164,174 de chacune des centrales 16,17 comporte en outre une première vanne de refoulement 169,179, reliée hydrauliquement au réservoir 161,171 de cette centrale hydraulique 16,17 par une première conduite interne de refoulement 39,49 du distributeur 164,174 et à la conduite de déploiement 191,192 connectée aux chambres de déploiement 136,146,156 des dispositifs de déplacement 13,14,15. Une conduite de retour 34,44 peut relier la première conduite interne de refoulement 39,49 au réservoir 161,171.

Le distributeur 164,174 de chacune des centrales 16,17 comporte enfin une seconde vanne de refoulement 167,177, reliée hydrauliquement au réservoir 161,171 de cette centrale hydraulique 16,17 par une seconde conduite interne de refoulement 37,47 du distributeur 164,174 et à la conduite de rétraction 193,194 connectée aux chambres de rétraction 137,147,157 des dispositifs de déplacement 13,14,15. La conduite de retour 34,44 peut relier la seconde conduite interne de refoulement 37,47 au réservoir 161,171.

Le distributeur 164,174 peut comporter, comme représenté sur les figures 4 à 7, un unique moteur électrique de distribution 31,41 commandant des ouvertures et fermetures combinées des vannes de freinage, de déploiement, de rétraction et de refoulement 165-169,175-179. Le moteur électrique de distribution 31,41 peut comporter par exemple un rotor de forme allongée. Des portions axiales de ce rotor correspondent respectivement aux vannes de freinage, de déploiement, de rétraction et de refoulement 165-169,175-179. Chaque portion axiale comporte un ou plusieurs évidements, dont les positions angulaires autour de l'axe de rotation du rotor peuvent être différentes de sorte que des positions angulaires particulières du rotor autour de son axe de rotation correspondent à une ouverture combinées d'une ou plusieurs de ces vannes, les autres vannes étant fermées.

Par exemple, pour une première position angulaire particulière du rotor autour de son axe de rotation, l'évidement de la portion axiale correspondant à la vanne de freinage 165,175 permet un passage de fluide entre la conduite interne de freinage 35,45 et la conduite de freinage 351,352 alors que les évidements des autres portions axiales correspondant aux vannes de déploiement, de rétraction et de refoulement 166-169,176-179 interdisent tout passage de fluide. Pour une deuxième position angulaire particulière, les évidements des portions axiales correspondant à la vanne de déploiement 166,176 et à la seconde vanne de refoulement 167,177 permettent un passage de fluide d'une part entre la conduite interne de déploiement 36,46 et la conduite de déploiement 191,192 et d'autre part entre la seconde conduite interne de refoulement 37,47 et la conduite de rétraction 193,194, alors que les évidements des autres portions axiales correspondant autres vannes de freinage 165,175, de rétraction 168,178 et à la première vannes de refoulement 169,179 interdit tout passage de fluide.

Le moteur électrique de distribution 31,41 peut être par exemple un moteur électrique pas à pas pour piloter avec précision la position angulaire du rotor.

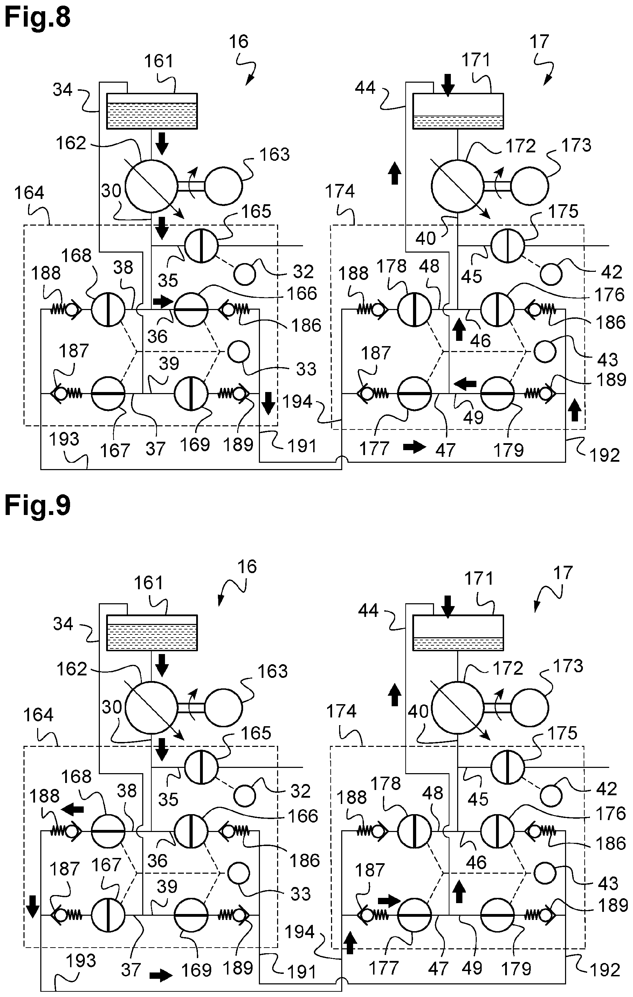

Alternativement, comme représenté sur les figures 8 et 9, le distributeur 164,174 peut comporter un premier moteur électrique de commande 32,42 commandant une ouverture et une fermeture de la vanne de freinage 165,175 et un second moteur électrique de commande 33,43 commandant des ouvertures et fermetures combinées des vannes de déploiement, de rétraction et de refoulement 166-169,176-179. Le second moteur électrique de commande 32,42 peut être sensiblement similaire au moteur électrique de distribution 31,41.

De façon optionnelle, le distributeur 164,174 de chacune des centrales 16,17 peut comporter quatre clapets 186-189 antiretour agencés respectivement entre les vannes de déploiement, de rétraction et de refoulement 166-169,176-179 et les conduites de déploiement 191,192 et de rétraction 193,194 correspondantes.

Un premier clapet 186 est agencé entre la vanne de déploiement 166,176 et la conduite de déploiement 191,192 afin d'une part de permettre le passage du fluide de la vanne de déploiement 166,176 vers les chambres de déploiement 136,146,156 et, d'autre part, d'empêcher le refoulement du fluide de la chambre de déploiement 136,146,156 vers la vanne de déploiement 166,176.

Un deuxième clapet 188 est agencé entre la vanne de rétraction 168,178 et la conduite de rétraction 193,194 afin d'une part de permettre le passage du fluide de la vanne de rétraction 168,178 vers les chambres de rétraction 137,147,157 et, d'autre part, d'empêcher le refoulement du fluide de la chambre de rétraction 137,147,157 vers la vanne de rétraction 168,178.

Un troisième clapet 189 est agencé entre la première vanne de refoulement 169,179 et la conduite de déploiement 191,192 afin d'une part d'empêcher le passage du fluide de la première vanne de refoulement 169,179 vers les chambres de déploiement 136,146,156 et, d'autre part, de permettre le refoulement du fluide de la chambre de déploiement 136,146,156 vers la première vanne de refoulement 169,179.

Un quatrième clapet 187 est agencé entre la seconde vanne de refoulement 167,177 et la conduite de rétraction 193,194 afin d'une part d'empêcher le passage du fluide de la seconde vanne de refoulement 167,177 vers les chambres de rétraction 137,147,157 et, d'autre part, de permettre le refoulement du fluide de la chambre de rétraction 137,147,157 vers la seconde vanne de refoulement 167,177.

Chaque centrale hydraulique 16,17 peut être pilotée par un contrôleur 4 formé par un calculateur du système électrohydraulique 1 ou un système avionique de l'aéronef 2. Le contrôleur 4 peut être relié aux centrales hydrauliques 16,17 par une liaison filaire ou sans fil. Alternativement, chaque centrale hydraulique 16,17 peut comporter son propre contrôleur 4. Le contrôleur 4 peut transmettre à chaque centrale hydraulique 16,17 des signaux électriques ou optiques, numériques ou analogiques, pour piloter la pompe 161,171 ainsi que le distributeur 164,174, et en particulier des ouvertures et fermetures combinées des différentes vannes de freinage, de déploiement, de rétraction et de refoulement 165-169,175-179.

Le contrôleur 4 est notamment relié à au moins une interface homme-machine de commande de freinage, par exemple une pédale et/ou une commande de frein de parking. Le contrôleur 4 est aussi relié à une interface homme-machine de commande du déploiement et de la rétraction des atterrisseurs 21,22,23. Le contrôleur 4 peut également être relié au système avionique de l'aéronef 2 pour permettre l'affichage de messages, par exemple, relatifs à une panne concernant au moins une des centrales hydrauliques 16,17, ou relatifs à une demande d'un essai de freinage avant atterrissage, ou relatifs à une maintenance d'une des centrales hydrauliques 16,17, d'un des dispositifs de freinage 11,12 ou des dispositif de déplacement 13,14,15.

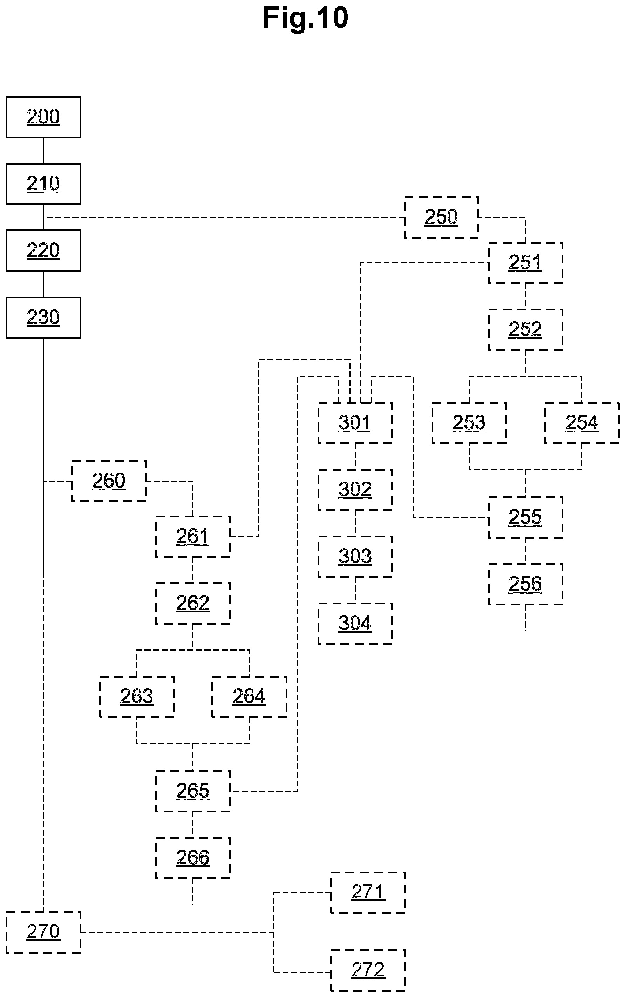

Le contrôleur 4 peut encore être relié à une mémoire ou comporter une mémoire stockant des instructions ou un programme d'ordinateur pour mettre en œuvre un procédé de commande d'un système électrohydraulique 1. La figure 10 représente un schéma synoptique de ce procédé.

Tout d'abord, le procédé comporte une alimentation 200 en fluide sous pression des distributeurs 164,174 des deux centrales hydrauliques 16,17 par l'intermédiaire des pompes 162,172 de ces centrales hydrauliques 16,17. Les pompes 162,172 sont activées par le contrôleur 4 qui pilote le démarrage des moteurs électriques de pompe 163,173. La pompe 162,172 de chaque centrale hydraulique 16,17 aspire ainsi le fluide contenu dans le réservoir 161,171 de cette centrale hydraulique 16,17 et le refoule vers le distributeur 164,174 de cette centrale hydraulique 16,17.

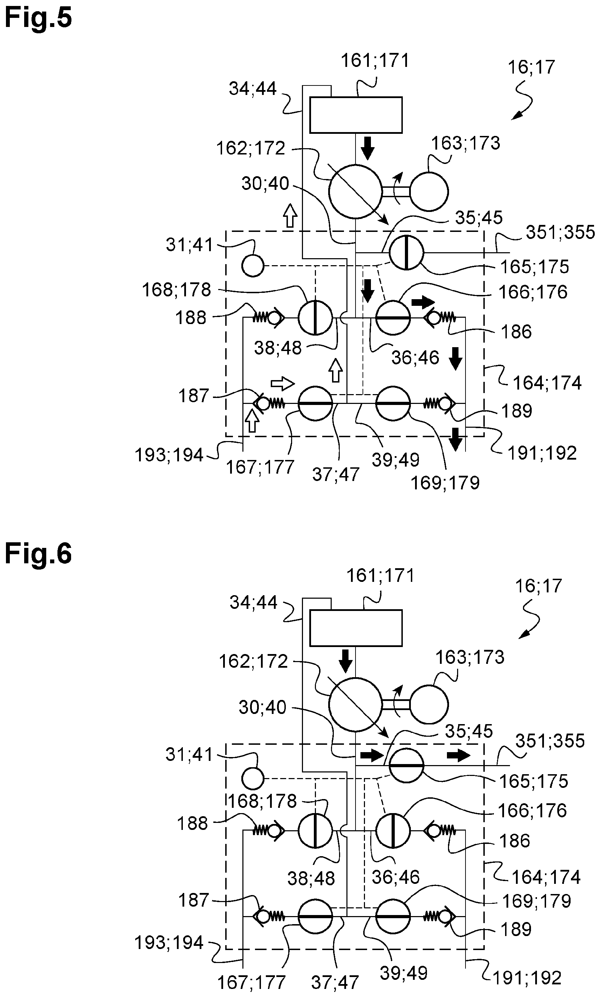

Ensuite, une extension 210 des dispositifs de déplacement 13,14,15 peut être réalisée afin de sortir les atterrisseurs 21,22,23 de leurs logements 55,56,57 respectifs, conformément à la figure 5. Le contrôleur 4 pilote dans ce cas d'une part l'ouverture des vannes de déploiement 166,176 et des secondes vannes de refoulement 167,177 des deux centrales hydrauliques 16,17, et d'autre part une fermeture des vannes de freinage 165,175 ainsi que des vannes de rétraction 168,178 et des premières vannes de refoulement 169,179 de ces deux centrales hydrauliques 16,17. Le fluide aspiré dans les réservoirs 161,171 est de la sorte dirigé dans les chambres de déploiement 136,146,156. L'ouverture des secondes vannes de refoulement 167,177 permet de refouler le fluide contenu dans les chambres de rétraction 137,147,157 dans les réservoirs 161,171.

Une alimentation 220 des dispositifs de freinage 11,12 peut être alors réalisée pour distribuer le fluide contenu dans les réservoirs 161,171 des centrales hydrauliques 16,17 vers les dispositifs de freinage 11,12, conformément à la figure 6. Le contrôleur 4 pilote dans ce cas d'une part une ouverture des vannes de freinage 165,175, et d'autre part une fermeture des vannes de déploiement 166,176 et de rétraction 168,178. Une vitesse de rotation plus ou moins importante de la pompe 162,172 peut être commandée en pilotant la vitesse de rotation du moteur électrique de pompe 163,173 selon la puissance de freinage recherchée.

Eventuellement, le contrôleur 4 peut piloter une fermeture des vannes de refoulement 167, 169,177,179, en particulier si le train d'atterrissage 2 ne comporte pas un dispositif de verrouillage mécanique en position sortie des atterrisseurs 21,22,23. Dans ce cas, le système électrohydraulique 1 peut comporter des clapets de surpression afin de limiter la pression hydraulique en cas d'augmentation de la température. Si le train d'atterrissage 2 comporte un tel dispositif de verrouillage mécanique, le contrôleur 4 peut piloter indifféremment une fermeture ou une ouverture des vannes de refoulement 167,169,177,179, le procédé de commande d'un système électrohydraulique 1 comportant une étape intermédiaire de verrouillage des atterrisseurs 21,22,23 en position sortie à l'aide du dispositif de verrouillage mécanique.

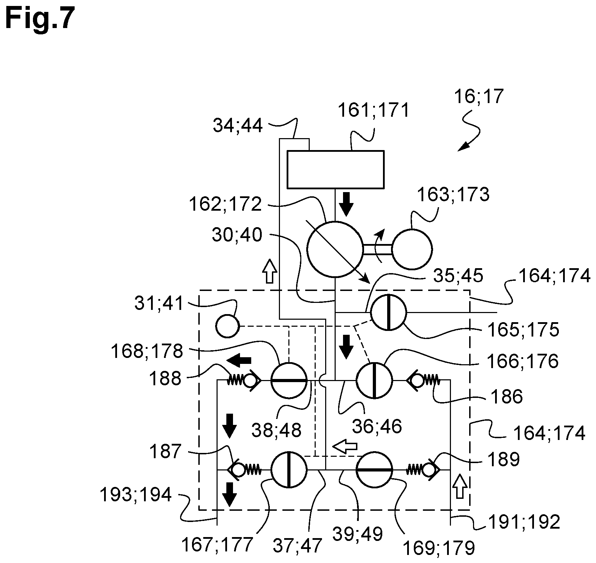

Enfin, une rétraction 230 des dispositifs de déplacement 13,14,15 est réalisée afin de rentrer les atterrisseurs 2 dans leurs logements 55,56,57 respectifs, conformément à la figure 7. Le contrôleur 4 pilote dans ce cas d'une part une ouverture des vannes de rétraction 168,178 et des premières vannes de refoulement 169,179, et d'autre part une fermeture des vannes de freinage 165,175 ainsi que des vannes de déploiement 166,176 et des secondes vannes de refoulement 167,177. Le fluide aspiré dans les réservoirs 161,171 est de la sorte dirigé dans les chambres de rétraction 137,147,157. L'ouverture des premières vannes de refoulement 169,179 permet de refouler le fluide contenu dans les chambres de déploiement 136,146,156 dans les réservoirs 161,171.

Lors des étapes d'extension 210, de rétraction 230 et d'alimentation 220 des dispositifs de freinage 11,12, les distributeurs 164,174 des deux centrales hydrauliques 16,17 sont pilotés de façon identique, les vannes de ces deux distributeurs 164,174 ayant les mêmes états, à savoir ouvert ou fermé.

Après chacune de ces étapes, une mise en configuration nominale 270 des vannes 165-169,175-179 peut être réalisée afin de placer les vannes 165-169,175-179 dans des états prédéterminés. Par exemple, une fermeture 271 des vannes de déploiement 166,176 et de rétraction 168,178, et une ouverture 272 de la vanne de freinage 165,175 et des premières et secondes vannes de refoulement 167,169,177,179 sont réalisées.

Avant ces fermeture 271 et ouverture 272, les pompes 162,172 sont désactivées.

Cette mise en configuration nominale se produit par exemple une fois le déploiement ou la rétraction des atterrisseurs terminé, ou suite à l'alimentation des dispositifs de freinage. Lors de cette mise en configuration nominale ou avant celle-ci, les pompes 162,172 des deux centrales hydrauliques 16,17 sont désactivées.

En outre, dans le but particulier d'immobiliser l'aéronef 2 sur un lieu de stationnement, un freinage de parking peut être réalisé en activant tout d'abord les pompes 162,172 des deux centrales 16,17, et en ouvrant les vannes de freinage 165,175. Une fois qu'une pression requise du fluide dans les dispositifs de freinage 11,12 est atteinte, les vannes de freinage 165,175 sont fermées et les pompes 162,172 sont désactivées. Dans ce cas, le système électrohydraulique 1 peut comporter un ou plusieurs clapets de surpression afin de limiter la pression hydraulique, notamment dans les conduites de freinage 351-357 et les dispositifs de freinage 11,12, en cas d'augmentation de la température.

De plus, le procédé peut comporter un équilibrage après déploiement 250, réalisé suite à l'extension 210 des dispositifs de déplacement 13,14,15. Cet équilibrage après déploiement 250 a pour but d'équilibrer les quantités du fluide contenu dans les réservoirs 161,171 des centrales hydraulique 16,17, comme représenté sur la figure 8.

Cet équilibrage après déploiement 250 comporte tout d'abord une détection 251, avec un ou plusieurs capteurs dédiés, d'une première centrale hydraulique 16 contenant la plus grande quantité de fluide parmi les deux centrales hydrauliques 16,17, l'autre centrale hydraulique 16,17 étant une seconde centrale hydraulique 17.

Ensuite, une activation 252 de la pompe 162 de la première centrale hydraulique 16 est réalisée. Le contrôleur 4 pilote le démarrage du moteur électrique de pompe 163 de cette première centrale hydraulique 16. La pompe 172 de la seconde centrale hydraulique 17 reste inactive. De la sorte, seul le fluide contenu dans le réservoir 161 de la première centrale 16 est aspiré et mis sous pression.

Une ouverture 253 de la vanne de déploiement 166 et de la seconde vanne de refoulement 167 de la première centrale hydraulique 16 et des première et seconde vannes de refoulement 179,177 de la seconde centrale hydraulique 17 est alors réalisée. Simultanément, une fermeture 254 de la vanne de rétraction 168 et de la première vanne de refoulement 169 de la première centrale hydraulique 16 et des vannes de déploiement 176 et de rétraction 178 de la seconde centrale hydraulique 17 est réalisée. Cette ouverture 253 et cette fermeture 254 sont pilotées par le contrôleur 4.

Dans le cas où les distributeurs 16,17 ne comportent pas les clapets 186-189, la seconde vanne de refoulement 177 de la seconde centrale hydraulique 17 doit être fermée pour permettre la réalisation de l'équilibrage après déploiement 250.

Ensuite, une détection 255 que les réservoirs 161,171 des première et seconde centrales hydrauliques 16,17 contiennent une même quantité de fluide à une marge près est effectuée. La marge est par exemple égale à 5% de la quantité maximale que peut contenir chacun des réservoirs 161,171.

Enfin, une désactivation 256 de la pompe 162 de la première centrale hydraulique 16 est alors réalisée, par l'intermédiaire du contrôleur 4 pilotant l'arrêt du moteur électrique de pompe 163 de cette première centrale hydraulique 16.

De façon similaire, le procédé peut comporter un équilibrage après rétraction 260, suite à la rétraction 230, pour équilibrer des quantités du fluide contenu dans les réservoirs 161,171 des centrales hydraulique 16,17, comme représenté sur la figure 9.

Cet équilibrage après rétraction 260 comporte tout d'abord une détection 261, avec le ou les capteurs dédiés, d'une première centrale hydraulique 16 contenant la plus grande quantité de fluide parmi les deux centrales hydrauliques 16,17, l'autre centrale hydraulique 16,17 étant une seconde centrale hydraulique 17.

Ensuite, une activation 262 de la pompe 162 de la première centrale hydraulique 16 est réalisée. Le contrôleur 4 pilote le démarrage du moteur électrique de pompe 163 de cette première centrale hydraulique 16. La pompe 172 de la seconde centrale hydraulique 17 reste inactive. De la sorte, seul le fluide contenu dans le réservoir 161 de la première centrale 16 est aspiré et mis sous pression.

Une ouverture 263 de la vanne de rétraction 168 et de la première vanne de refoulement 169 de la première centrale hydraulique 16 et des premières et secondes vannes de refoulement 179,177 de la seconde centrale hydraulique 17 est alors réalisée. Simultanément, une fermeture de 264 de la vanne de déploiement 166 et de la seconde vanne de refoulement 167 de la première centrale hydraulique 16 et des vannes de déploiement 176 et de rétraction 178 de la seconde centrale hydraulique 17 est réalisée. Cette ouverture 253 et cette fermeture 254 sont pilotées par le contrôleur 4.

Dans le cas où les distributeurs 16,17 ne comportent pas les clapets 186-189, la première vanne de refoulement 179 de la seconde centrale hydraulique 17 doit être fermée pour permettre la réalisation de l'équilibrage après déploiement 250.

Ensuite, une détection 265 que les réservoirs 161,171 des première et seconde centrales hydrauliques 16,17 contiennent une même quantité de fluide à une marge près est effectuée.

Enfin, une désactivation 266 de la pompe 162 de la première centrale hydraulique 16 est alors réalisée, par l'intermédiaire du contrôleur 4 pilotant l'arrêt du moteur électrique de pompe 163 de cette première centrale hydraulique 16.

Les détections 251,255,261,265 peuvent être réalisées de façon similaire. Par exemple, les détections 251,255,261,265 peuvent comporter une mesure 301 des quantités de fluide contenu dans les réservoirs 161,171 des centrales hydrauliques 16,17. Cette mesure 301 peut notamment être faite à l'aide de jauges mesurant les quantités de fluide dans chacun des réservoirs 161,171 ou de débitmètres mesurant les quantités de fluide entrant et sortant de chacun des réservoirs 161,171. Le contrôleur 4 peut mémoriser ces quantités dans une mémoire.

Une comparaison 302 de ces quantités est effectuée par le contrôleur 4.

Suite à cette comparaison, une détermination 303 de la première centrale hydraulique 16 dont le réservoir 161 contient la plus grande quantité de fluide est réalisée par le contrôleur 4, l'autre centrale hydraulique 16,17 étant la seconde centrale hydraulique 17.

Suite à cette comparaison, une détermination 304 que les réservoirs 161,171 des centrales hydrauliques 16,17 contiennent une même quantité de fluide à la marge près peut aussi être réalisée par le contrôleur 4.

En outre, l'étape de détermination 303 de la première centrale hydraulique 16 peut également prendre en compte la marge. La première centrale hydraulique 16 est alors la centrale 16,17 dont le réservoir 161,171 contient une quantité de fluide supérieure à la somme de la quantité de fluide contenu dans le réservoir 161,171 de l'autre centrale 16,17 plus cette marge.

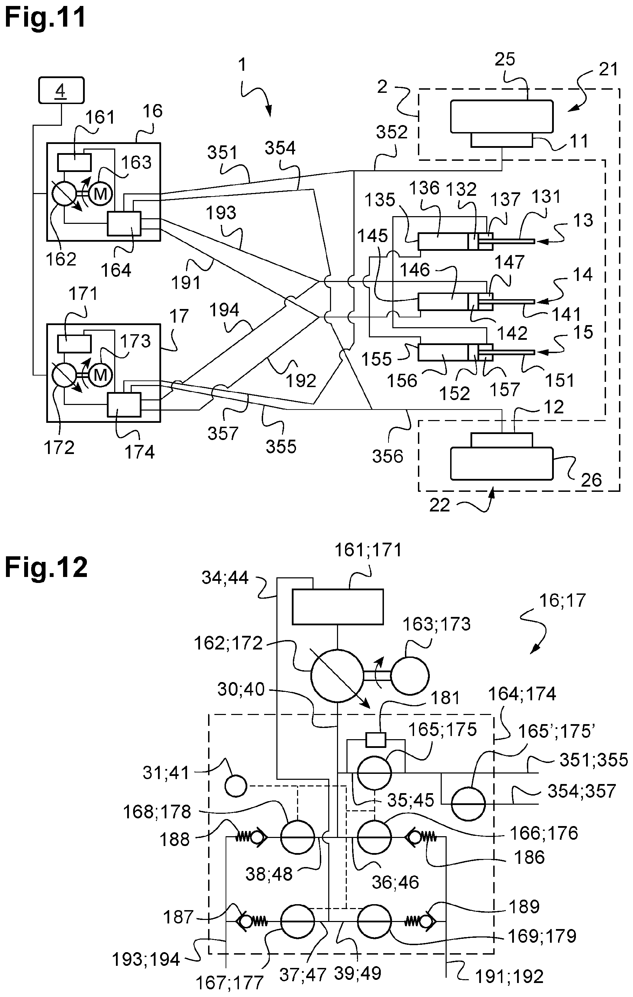

Par ailleurs, une variante du système 1 électrohydraulique représenté sur la figure 3 est représentée sur la figure 11 et la figure 12. Selon cette variante, le distributeur 16,17 comporte, en plus de la vanne de freinage 165,175, une vanne de secours de freinage 165',175'. La première conduite de freinage 351 relie hydrauliquement, selon cette variante, la vanne de freinage 165 de la première centrale hydraulique 16 au premier dispositif de freinage 11 et la seconde conduite de freinage 355 relie hydrauliquement la vanne de freinage 175 de la seconde centrale hydraulique 17 au second dispositif de freinage 12. De plus, une troisième conduite de freinage 354 relie hydrauliquement la vanne de secours de freinage 165' de la première centrale hydraulique 16 au second dispositif de freinage 12 et la quatrième conduite de freinage 357 relie hydrauliquement la vanne de secours de freinage 175' de la seconde centrale hydraulique 17 au premier dispositif de freinage 11.

De la sorte, lorsque les deux centrales hydrauliques 16,17 sont pleinement fonctionnelles, pour réaliser un freinage des roues 25,26 des atterrisseurs 21,22, les pompes 162,172 des deux centrales hydrauliques 16,17 sont activées et les vannes de freinage 165,175 des deux centrales hydrauliques 16,17 sont ouvertes, les vannes de secours de freinage 165',175' de ces deux centrales hydrauliques 16,17 étant maintenues fermées. Les deux dispositifs de freinage 11,12 sont ainsi alimentés respectivement et indépendamment par les centrales hydrauliques 16,17 de façon similaire à l'exemple représenté sur la figure 1. Dans ce cas, un freinage différentiel des deux atterrisseurs 21,22 est possible.

En cas de disfonctionnement d'une des deux centrales hydrauliques 16,17, par exemple la première centrale hydraulique 16, pour réaliser un freinage des roues 25,26 des atterrisseurs 21,22, la vanne de freinage 165 et la vanne de secours de freinage 165' de cette première centrale hydraulique 16 défectueuse sont fermées ou maintenues fermées. Cette première centrale hydraulique 16 défectueuse n'alimente ainsi aucun dispositif de freinage 11,12. Parallèlement, la pompe 172 de la seconde centrale hydraulique 17 fonctionnelle est activée et la vanne de freinage 175 et la vanne de secours de freinage 175' de cette seconde centrale hydraulique 17 fonctionnelle sont ouvertes. De la sorte, cette seconde centrale hydraulique 17 fonctionnelle alimente seule les deux dispositifs de freinage 11,12 permettant la réalisation d'un freinage efficace des deux atterrisseurs 21,22. Toutefois, dans ce cas d'une première centrale hydraulique 16 défectueuse, un freinage différentiel des deux atterrisseurs 21,22 n'est pas possible.

De plus, dans le cadre de cette variante, un clapet de surpression 181 peut être agencé en parallèle de la vanne de freinage 165,175. En cas de disfonctionnement d'une des deux centrales hydrauliques 16,17, le clapet de surpression 181 permet de limiter l'augmentation de pression dans le circuit de freinage en cas de changement de température.

Enfin, le système électrohydraulique 1 selon l'invention permet avantageusement de pallier des pannes au sein du distributeur 164,174 et, en particulier une défaillance au niveau d'une des vannes 165-169,175-179.

Par exemple, une fuite au niveau d'une vanne de rétraction 168,178 lors de l'alimentation 220 des dispositifs de freinage 11,12, n'entraînera avantageusement pas une rétraction des atterrisseurs 21,22,23. En effet, la rétraction des atterrisseurs 21,22,23 nécessite une pression importante dans les chambres de rétraction 137,147,157. Cependant, en présence ou non du deuxième clapet 188, le fluide venant de la pompe 162,172 peut traverser cette vanne de rétraction 168,178 défectueuse, mais retournera au moins en partie dans le réservoir 161,171, via la seconde vanne de refoulement 167,177 ouverte empêchant ainsi une mise en pression trop importante des chambres de rétraction 137,147,157.

Un comportement similaire se produit en cas de fuite au niveau d'une vanne de déploiement 166,176 lors de l'alimentation 220 des dispositifs de freinage 11,12, le fluide retournant dans le réservoir 161,171, via la première vanne de refoulement 169,179 ouverte.

Par ailleurs, la détection de ces pannes peut être envisagée lors d'un essai réalisé avant l'atterrissage de l'aéronef 1. Une mise en pression du circuit permettrait de détecter soit une absence de débit, se traduisant par une consommation électrique élevée, en particulier au niveau du moteur électrique de pompe 163,173, ou une présence d'un débit de fuite.

Selon un autre exemple, une fuite, voire une rupture sur une conduite de déploiement 191,192 ou de rétraction 193,194, en aval du distributeur 164,174 n'empêchera pas la bonne réalisation d'un freinage, via l'alimentation 220, y compris du freinage de parking, grâce aux vannes de déploiement 166,176 et de rétraction 168,178 fermées. Seul le déploiement ou la rétraction des atterrisseurs ne pourrait alors pas être réalisé.

De façon similaire, une fuite, voire une rupture de la conduite de freinage 351,352 n'empêcherait pas le déploiement ou la rétraction des atterrisseurs 21,22,23, la vanne de freinage 165,175 étant fermée dans ces cas-là. De plus, la fonction freinage pourra alors effectuée sur une seule roue 25,26 grâce à la centrale hydraulique 16,17 non concernée par cette panne.

Enfin, en cas de mise en communication fluidique des conduites d'alimentation 30,40 et de retour 34,44 d'une des centrales hydrauliques 16,17, une perte de la fonction freinage pilotée par cette centrale 16,17 se produit, l'autre centrale 16,17 restant fonctionnelle pour alimenter au moins un des deux dispositifs de freinage 11,12. De même, cette centrale hydraulique 16,17 défectueuse ne pourra pas commander un déploiement ou une rétraction des atterrisseurs 21,22,23, mais ces opérations pourront être pilotées par l'autre centrale 16,17 pleinement fonctionnelle.

En fait, grâce à l'architecture innovante de système électrohydraulique 1 selon l'invention, toute panne en amont d'un distributeur 164,174 d'une centrale hydraulique 16,17 affecte uniquement le fonctionnement de cette centrale hydraulique 16,17, l'autre centrale hydraulique 16,17 restant pleinement fonctionnelle pour alimenter d'une part au moins un dispositif de freinage 11,12, et d'autre part les dispositifs de déplacement 13,14,15.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Système (1) électrohydraulique de commande d'un train d'atterrissage (2) d'un aéronef (5), ledit train d'atterrissage (2) comportant une pluralité d'atterrisseurs (21,22,23) rétractables munis chacun d'au moins une roue (25,26,27),
**caractérisé en ce que** ledit système (1) comporte :
- au moins deux dispositifs de freinage (11,12) pour freiner ladite au moins une roue (25,26,27) d'au moins deux atterrisseurs (21,22,23),
- un dispositif de déplacement (13,14,15) par atterrisseur pour déplacer un atterrisseur (21,22,23) par rapport à un logement (55,56,57) dudit aéronef (5),
- deux centrales hydrauliques (16,17), chacune desdites deux centrales hydrauliques (16,17) étant reliée hydrauliquement auxdits dispositifs de déplacement (13,14,15) et à au moins un desdits dispositifs de freinage (11,12), chaque centrale hydraulique (16,17) comportant un réservoir (161,171) contenant un fluide ainsi qu'une pompe (162,172) entraînée par un moteur électrique de pompe (163,173) et un distributeur (164,174) configuré pour distribuer ledit fluide audit au moins un dispositif de freinage (11,12) et auxdits dispositifs de déplacement (13,14,15).

2. Système (1) selon la revendication 1,
dans lequel ledit système (1) comporte uniquement deux dispositifs de freinage (11,12) alimentés hydrauliquement respectivement par lesdites deux centrales hydrauliques (16,17).

3. Système (1) selon la revendication 1,
dans lequel ledit système (1) comporte uniquement deux dispositifs de freinage (11,12) alimentés hydrauliquement conjointement par lesdites deux centrales hydrauliques (16,17).

4. Système (1) selon l'une quelconque des revendications 1 à 3,
dans lequel ledit train d'atterrissage (2) comporte trois atterrisseurs (25,26,27), et lesdites deux centrales hydrauliques (16,17) sont reliées hydrauliquement auxdits dispositifs de déplacement (13,14,15) associés auxdits trois atterrisseurs (25,26,27).

5. Système (1) selon l'une quelconque des revendications 1 à 4,
dans lequel lesdits dispositifs de déplacement (13,14,15) comportent chacun un piston (132,142,152) solidaire d'une tige (131,141,151) et un cylindre (135,145,155) creux, ledit cylindre (135,145,155) comportant une chambre de déploiement (136,146,156) et une chambre de rétraction (137,147,157) séparées par le piston (132,142,152), ledit distributeur (164,174) de chacune desdites centrales hydrauliques (16,17) comporte :
- une vanne de freinage (165,175), reliée hydrauliquement à ladite pompe (162,172) de cette centrale hydraulique (16,17) et à au moins un desdits dispositifs de freinage (11,12) pour distribuer ledit fluide contenu dans ledit réservoir (161,171) de cette centrale hydraulique (16,17) audit au moins un dispositif de freinage (11,12),
- une vanne de déploiement (166,176), reliée hydrauliquement à ladite pompe (162,172) de cette centrale hydraulique (16,17) et auxdites chambres de déploiement (136,146,156) desdits dispositifs de déplacement (13,14,15) pour distribuer ledit fluide contenu dans ledit réservoir (161,171) de cette centrale hydraulique (16,17) dans lesdites chambres de déploiement (136,146,156),
- une vanne de rétraction (168,178), reliée hydrauliquement à ladite pompe (162,172) de cette centrale hydraulique (16,17) et auxdites chambres de rétraction (137,147,157) desdits dispositifs de déplacement (13,14,15) pour distribuer ledit fluide contenu dans ledit réservoir (161,171) de cette centrale hydraulique (16,17) dans lesdites chambres de rétraction (137,147,157),
- une première vanne de refoulement (169,179), reliée hydrauliquement audit réservoir (161,171) de cette centrale hydraulique (16,17) et auxdites chambres de déploiement (136,146,156) desdits dispositifs de déplacement (13,14,15) pour refouler ledit fluide contenu dans lesdites chambres de déploiement (136,146,156) dans ledit réservoir (161,171) de cette centrale hydraulique (16,17), et
- une seconde vanne de refoulement (167,177), reliée hydrauliquement audit réservoir (161,171) de cette centrale hydraulique (16,17) et auxdites chambres de rétraction (137,147,157) desdits dispositifs de déplacement (13,14,15) pour refouler ledit fluide contenu dans lesdites chambres de rétraction (137,147,157) dans ledit réservoir (161,171) de cette centrale hydraulique (16,17).

6. Système (1) selon la revendication 5,
dans lequel lesdits distributeurs (164,174) comportent quatre clapets (186,187,188,189) antiretour associés en série respectivement auxdites vannes de déploiement, de rétraction et de refoulement (166-169,176-179).

7. Système (1) selon l'une quelconque des revendications 5 à 6,
dans lequel ledit distributeur (164,174) comporte un unique moteur électrique de distribution (31,41) commandant des ouvertures et fermetures combinées desdites vannes de freinage, de déploiement, de rétraction et de refoulement (165-169,175-179).

8. Système (1) selon l'une quelconque des revendications 5 à 6,
dans lequel ledit distributeur (164,174) comporte un premier moteur électrique de commande (32,42) commandant une ouverture et une fermeture de ladite vanne de freinage (165,175) et un second moteur électrique de commande (33,43) commandant des ouvertures et fermetures combinées desdites vannes de déploiement, de rétraction et de refoulement (166-169,176-179).

9. Aéronef (5) comprenant un train d'atterrissage (2) comportant au moins deux atterrisseurs (21,22,23) rétractables munis chacun d'au moins une roue (25,26,27), ledit aéronef (5) comportant un système (1) électrohydraulique de commande d'un train d'atterrissage (2) selon l'une quelconque des revendications 1 à 8.

10. Procédé de commande d'un système électrohydraulique (1) selon l'une quelconque des revendications 5 à 8, ledit procédé comportant les étapes suivantes :
- alimentation (200) en fluide sous pression dudit distributeur (164,174) de chaque centrale hydraulique (16,17) par l'intermédiaire de ladite pompe (162,172) de ladite centrale hydraulique (16,17) respective,
- extension (210) desdits dispositifs de déplacement (13,14,15), lesdites vannes de freinage (165,175) étant fermées, lesdites vannes de déploiement (166,176) et lesdites secondes vannes de refoulement (167,177), étant ouvertes, lesdites vannes de rétraction (168,178) et lesdites premières vannes de refoulement (169,179) étant fermées,
- alimentation (220) desdits dispositifs de freinage (11,12), lesdites vannes de freinage (165,175) étant ouvertes, lesdites vannes de déploiement (166,176) et de rétraction (168,178) étant fermées,
- rétraction (230) desdits dispositifs de déplacement (13,14,15), lesdites vannes de freinage (165,175) étant fermées, lesdites vannes de rétraction (168,178) et lesdites première vanne de refoulement (169,179) étant ouvertes, lesdites vannes de déploiement (166,176) et lesdites secondes vannes de refoulement (167,177) étant fermées.

11. Procédé de commande selon la revendication 10,
ledit procédé comportant un équilibrage après déploiement (250), réalisée suite à ladite extension (210), pour équilibrer des quantités dudit fluide contenu dans lesdits réservoirs (161,171) desdites centrales hydraulique (16,17), lesdits distributeurs (164,174) comportant quatre clapets (186,187,188,189) antiretour associés en série respectivement auxdites vannes (166-169,176-179) selon la revendication 6,
ledit équilibrage après déploiement (250) comportant les étapes suivantes :
- détection (251) d'une première centrale hydraulique (16) contenant la plus grande quantité de fluide parmi lesdites centrales hydrauliques (16,17), l'autre centrale hydraulique (16,17) étant une seconde centrale hydraulique (17),
- activation (252) de ladite pompe (162) de ladite première centrale hydraulique (16),
- ouverture (253) de ladite vanne de déploiement (166) et de ladite seconde vanne de refoulement (167) de ladite première centrale hydraulique (16) et desdites premières et secondes vannes de refoulement (179,177) de ladite seconde centrale hydraulique (17),
- fermeture (254) de ladite vanne de rétraction (168) et de ladite première vanne de refoulement (169) de ladite première centrale hydraulique (16) et desdites vannes de déploiement (176) et de rétraction (178) de ladite seconde centrale hydraulique (17),
- détection (255) que lesdits réservoirs (161,171) desdites première et seconde centrales hydrauliques (16,17) contiennent une même quantité de fluide à une marge près, et
- désactivation (256) de ladite pompe (162) de ladite première centrale hydraulique (16).

12. Procédé de commande selon l'une quelconque des revendications 10 à 11,
ledit procédé comportant un équilibrage après rétraction (260), suite à ladite rétraction (230), pour équilibrer des quantités dudit fluide contenu dans lesdits réservoirs (161,171) desdites centrales hydraulique (16,17), lesdits distributeurs (164,174) comportant quatre clapets (186,187,188,189) antiretour associés en série respectivement auxdites vannes de déploiement, de rétraction et de refoulement (166-169,176-179) selon la revendication 6,
ledit équilibrage après rétraction (260) comportant les étapes suivantes :
- détection (261) d'une première centrale hydraulique (16) contenant la plus grande quantité de fluide parmi lesdites centrales hydrauliques (16,17), l'autre centrale hydraulique (16,17) étant une seconde centrale hydraulique (17),
- activation (262) de ladite pompe (162) de ladite première centrale hydraulique (16),
- ouverture (263) de ladite vanne de rétraction (168) et ladite première vanne de refoulement (168) de ladite première centrale hydraulique (16) et desdites premières et secondes vannes de refoulement (177,179) de ladite seconde centrale hydraulique (16),
- fermeture (264) de ladite vanne de déploiement (166) et ladite seconde vanne de refoulement (167) de ladite première centrale hydraulique (16) et desdites vannes de déploiement (176) et de rétraction (178) de la dite seconde centrale hydraulique (16),
- détection (265) que lesdits réservoirs (161,171) desdites première et seconde centrales hydrauliques (16,17) contiennent une même quantité de fluide à une marge près, et
- désactivation (266) de ladite pompe (162) de ladite première centrale hydraulique (16).

13. Procédé de commande selon l'une quelconque des revendications 10 à 12,
lesdites détections (251,255,261,265) comportant :
- une mesure (301) des quantités de fluide contenu dans lesdits réservoirs (161,171) desdites centrales hydrauliques (16,17),
- une comparaison (302) desdites quantités,
- une détermination (303) de la première centrale hydraulique (16) dont ledit réservoir (161) contient le plus de fluide, et
- une détermination (304) que lesdits réservoirs (161,171) desdites centrales hydrauliques (16,17) contiennent une même quantité de fluide à une marge près.

14. Procédé de commande selon l'une quelconque des revendications 10 à 13,
ledit procédé comportant une mise en configuration nominale (270) desdites vannes (165-169,175-179), lesdites pompes (162,172) étant désactivées, ladite mise en configuration nominale (270) comportant :
- une fermeture (271) desdites vannes de déploiement (166,176) et de rétraction (168,178), et
- une ouverture (272) de ladite vanne de freinage (165,175) et desdites premières et secondes vannes de refoulement (167,169,177,179).
